# EUROPEAN PATENT SPECIFICATION

(11) **EP 4 276 698 B1**
(45) Date of publication and mention of the grant of the patent: **25.02.2026**
(21) Application number: 21925813.4
(22) Date of filing: 09.12.2021
(51) Int. Cl.: G06N 3/08, G06N 20/00, G06N 3/045, G06N 3/0464, G06N 3/096

(54) **MACHINE LEARNING DEVICE, MACHINE LEARNING METHOD, AND MACHINE LEARNING PROGRAM**
MASCHINENLERNVORRICHTUNG, MASCHINENLERNVERFAHREN UND MASCHINENLERNPROGRAMM
DISPOSITIF D'APPRENTISSAGE MACHINE, PROCÉDÉ D'APPRENTISSAGE MACHINE ET PROGRAMME D'APPRENTISSAGE MACHINE

(30) Priority: 10.02.2021 JP 2021019468
(43) Date of publication of application: 15.11.2023
(73) Proprietor: JVCKENWOOD Corporation, Yokohama-shi, Kanagawa 2210022 (JP)
(72) Inventor: TAKEHARA Hideki, Yokohama-shi Kanagawa 221-0022 (JP); KIDA Shingo, Yokohama-shi Kanagawa 221-0022 (JP); YANG Yincheng, Yokohama-shi Kanagawa 221-0022 (JP)
(74) Representative: Carstens, Dirk Wilhelm
(86) International application number: PCT/JP2021/045349
(87) International publication number: WO 2022/172569

(56) References cited:
- WO-A1-2020/054058
- WO-A1-2020/188971
- PLESTED JO ET AL: "An Analysis of the Interaction Between Transfer Learning Protocols in Deep Neural Networks", 9 December 2019, 20191209, PAGE(S) 312 - 323, XP047532402
- CHU BRIAN ET AL: "Best Practices for Fine-Tuning Visual Classifiers to New Domains", 24 November 2016, 20161124, PAGE(S) 435 - 442, XP047566160
- GUO YUNHUI ET AL: "SpotTune: Transfer Learning Through Adaptive Fine-Tuning", 2019 IEEE/CVF CONFERENCE ON COMPUTER VISION AND PATTERN RECOGNITION (CVPR), IEEE, 15 June 2019 (2019-06-15), pages 4800 - 4809, XP033686837, DOI: 10.1109/CVPR.2019.00494
- SOEKHOE DEEPAK ET AL: "On the Impact of Data Set Size in Transfer Learning Using Deep Neural Networks", 21 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 50 - 60, ISBN: 978-3-540-74549-5, XP047357029
- KHAN NAIMUL MEFRAZ ET AL: "Transfer Learning With Intelligent Training Data Selection for Prediction of Alzheimer's Disease", IEEE ACCESS, vol. 7, 17 June 2019 (2019-06-17), pages 72726 - 72735, XP011729592, [retrieved on 20190612], DOI: 10.1109/ACCESS.2019.2920448
- KIM SEUNGHYEON; KIM WOOYOUNG; NOH YUNG-KYUN; PARK FRANK C.: "Transfer learning for automated optical inspection", 2017 INTERNATIONAL JOINT CONFERENCE ON NEURAL NETWORKS (IJCNN), IEEE, 14 May 2017 (2017-05-14), pages 2517 - 2524, XP033112309, DOI: 10.1109/IJCNN.2017.7966162

## Description

### [TECHNICAL FIELD]

The present invention relates to machine learning technologies.

### [BACKGROUND ART]

Transfer learning is known as a technology of adapting a model trained in a domain to another domain. In transfer learning, the domain that is a source is referred to as a source domain, and the domain that is a destination is referred to as a target domain. It is required to adapt a model trained in a source model to a target domain efficiently.

Patent document 1 JP2020-502665 discloses domain transformation neural networks configured to receive an input image from a source domain and process a network input comprising the input image from the source domain to generate a transformed image that is a transformation of the input image from the source domain to a target domain that is different from the source domain.

Attention is drawn to PLESTED JO ET AL: "An Analysis of the Interaction Between Transfer Learning Protocols in Deep Neural Networks", pages 312-323, XP047532402, relating to transferability of features in deep neural networks, interaction between training hyperparameters and optimal number of layers to transfer the size of a target data set. Further attention is drawn to CHU BRIAN ET AL: "Best Practices for Fine-Tuning Visual Classifiers to New Domains", pages 435-442, XP047566160, relating to the design-space for fine-tuning across datasets and recommendations based on key characteristics of the target dataset: visual distance from source dataset and amount of available training data.

### [SUMMARY OF INVENTION]

When adapting a model trained in a source domain to a target domain in transfer learning, transfer learning has been performed by disregarding the property of the domain. This has led to a problem in that the quality of generalization of inference precision is lowered, or the volume of process grows unnecessarily large.

The present invention addresses the issue described above, and a purpose thereof is to provide a machine learning technology capable of performing transfer learning in accordance with the property of a domain.

The invention is defined by the appended independent claims. Further embodiments are defined by the appended dependent claims.

### [BRIEF DESCRIPTION OF DRAWINGS]

Fig. 1 shows a configuration of a machine learning device and an inference device according to the embodiment;
Fig. 2 shows a detailed configuration of the transfer learning unit of the machine learning device of Fig. 1;
Fig. 3 shows a structure of a neural network model used as a source model and a target model in the machine learning device of Fig. 1;
Fig. 4 shows layers in the target model that are targeted for training in accordance with the domain adaptation data richness;
Fig. 5 shows further exemplary layers that are targeted for training in accordance with the domain adaptation data richness;
Fig. 6 shows further exemplary layers that are targeted for training in accordance with the domain adaptation data richness; and
Fig. 7 is a flowchart showing a sequence of machine learning steps executed by the machine learning device of Fig. 1.

### [DESCRIPTION OF EMBODIMENTS]

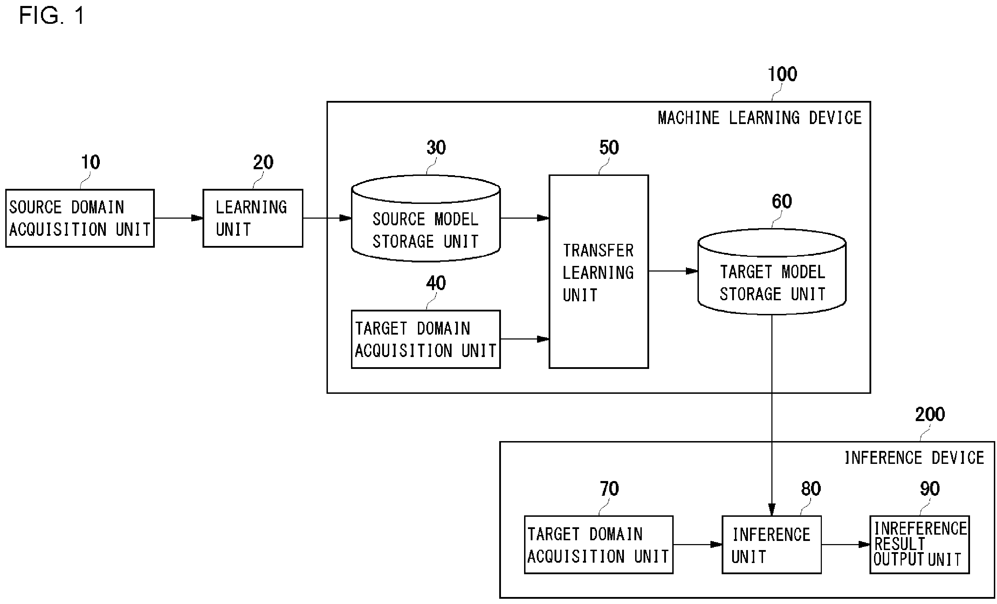

Fig. 1 shows a configuration of a machine learning device 100 and an inference device 200 according to the embodiment. The machine learning device 100 includes a source model storage unit 30, a target domain acquisition unit 40, a transfer learning unit 50, and a target model storage unit 60. The inference device 200 includes a target domain acquisition unit 70, an inference unit 80, and an inference result output unit 90.

Transfer learning is one of machine learning methods and is a method of adapting a model trained for a first task having sufficient data to learning of a second task related to the first task but not having sufficient data. Transfer learning can transfer the knowledge learned on the basis of sufficient data to a further task and so makes it possible to obtain highly precise results for the second task not having much data.

In transfer learning, a case in which the input domain of the first task and the input domain of the second task are of the same type and differ only in probability distribution is referred to as "domain adaptation".

The input domain of the first task that is a source of transfer is referred to as "source domain", and the input domain of the second task that is a destination of transfer is referred to as "target domain". Further, the model trained for the first task is referred to as "source model", and the model trained for the second task is referred to as "target model".

In one example of domain adaptation, it is preferable to use, as the source domain, computer graphics (CG) and Web images, for which it is easy to collect data, and to use, as the target domain, real images captured by a camera or the like. The forms of the source domain and the target domain are not limited to these.

By training the source model using a large quantity of CG images as the source domain and using images captured by the camera as the target domain, transfer learning from the source model is performed in domain adaptation to generate a target model. Classes included in the domain are exemplified by persons, cars, bicycles, dogs, and motorcycles, and the task is categorization.

The machine learning device 100 is a device to generate a target model by transfer learning, based on a trained source model and a target domain.

The source domain acquisition unit 10 acquires, as the source domain, CG images of persons, cars, bicycles, dogs, and motorcycles in a quantity sufficiently large to train the source model to categorize persons, cars, bicycles, dogs, and motorcycles with high precision.

The learning unit 20 uses the source domain to train a neural network model by machine learning to generate a source model and stores the generated source model in the source model storage unit 30. The source model can categorize the source domain with high precision.

The source model stored in the source model storage unit 30 is a trained source model used as a model at the source of transfer in transfer learning. The source model is a neural network model.

The target domain acquisition unit 40 acquires, as the target domain, images of persons, cars, bicycles, dogs, and motorcycles captured by a camera. The target domain generally has a smaller quantity of data than the source domain.

The transfer learning unit 50 uses the target domain acquired by the target domain acquisition unit 40 to generate a target model by applying transfer learning to the source model stored in the source model storage unit 30. The transfer learning unit 50 stores the generated target model in the target model storage unit 60.

The target model stored in the target model storage unit 60 is a trained model generated by transfer learning. The target model is a neural network model. The target model is derived from re-training a part of the source model at the source of transfer that is duplicated, by using the target domain.

The inference device 200 is a device that infers from and categorizes images by using the target model generated by the machine learning device 100. The inference device 200 is provided with, for example, an imaging unit, infers from images acquired from the imaging unit, and outputs a result of inference.

The target domain acquisition unit 70 acquires the target domain targeted for inference and supplies the target domain to the inference unit 80. The inference unit 80 infers from the target domain based on the target model stored in the target model storage unit 60 and outputs a result of inference to the inference result output unit 90. The inference result output unit 90 outputs the categorization resulting from the inference.

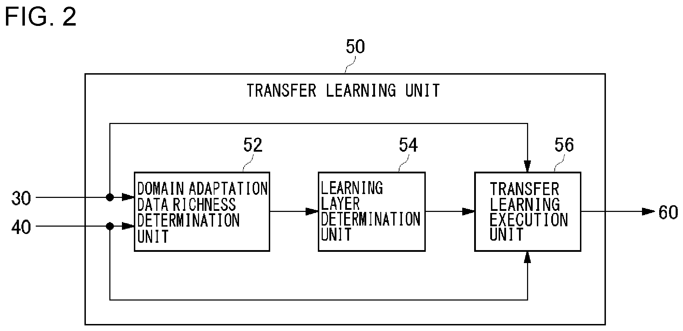

Fig. 2 shows a detailed configuration of the transfer learning unit 50 of the machine learning device 100. The transfer learning unit 50 includes a domain adaptation data richness determination unit 52, a learning layer determination unit 54, and a transfer learning execution unit 56.

The domain adaptation data richness determination unit 52 determines domain adaptation data richness based on the number of items training data in the target domain.

More specifically, the domain adaptation data richness is a ratio between the number of items of training data in a class in the target domain in which class the per-class number of items of training data is the smallest and the predetermined number of items of training data TDNUM. The predetermined number of items of training data is the number of items of training data sufficient to perform learning accurately. The predetermined number of items training data depends on the neural network model. It is assumed here that the neural network model is VGG16 and the predetermined number of items of training data is 3000. The precision of learning according to the number of items of training data may be measured in advance by using the training data of the source domain, and the number of items of training data resulting in a precision higher than the desired precision may be used as the predetermined number of items of training data. The domain adaptation data richness is preferably calculated by the following equation. MIN(N,M) is a function to select the smallest value of n or m. In this case, the domain adaptation data richness is a value not smaller than 0 and not larger than 1. Domain adaptation data richness=MIN(1, (number of items of training data in a class, in the target domain, with the smallest number of items of training data)/TDNUM).

The learning layer determination unit 54 determines a layer in the target model (a neural network model) targeted for training, based on the domain adaptation data richness.

To be specific, the learning layer determination unit 54 ensures that the higher the domain adaptation data richness, the larger the number of layers in the target model targeted for training, and, the lower the domain adaptation data richness, the smaller the number of layers in the target model targeted for training.

The learning layer determination unit 54 includes a larger number of layers from higher layers (layers near the input) to lower layers (layers near the output) as targets of training when the domain adaptation data richness is higher, and, defines a smaller number of layers toward lower layers (layers near the output) to be targets of training when the domain adaptation data richness is lower. In other words, the learning layer determination unit 54 includes more of the layers near the input layer as layers targeted for training, as the domain adaptation data richness becomes higher.

The learning layer determination unit 54 determines only full-connected layers in the target model to be layers targeted for training when the domain adaptation data richness is equal to or lower than a predetermined value.

Thus, when the domain adaptation data richness is low, i.e., when the number of items of training data is small, it is possible, by training only lower layers in the target model, to adapt the source model to the target model such that the generalization capability of detailed feature extraction of higher layers in the source model is maintained and to maintain the precision of the target model trained by transfer learning at a high level. Conversely, when the domain adaptation data richness is high, i.e., when the number of items of training data is large, it is possible, by training a large number of layers in the target model, to increase the precision of the target model trained by transfer learning.

The transfer learning execution unit 56 uses images of the target domain as training data to apply transfer learning to the layer(s) of the target model determined by the learning layer determination unit 54 to be targeted for training. Those layers other than the layers determined to be targeted for training are layers that are not trained. The layers of the duplicated source model are used as they are without being newly trained.

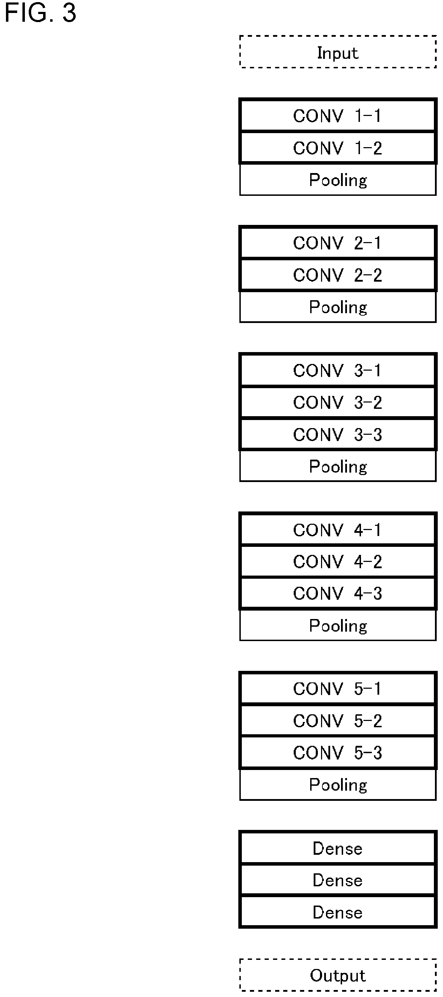

Fig. 3 shows a structure of a neural network model used as a source model and a target model in the machine learning device 100.

In the embodiment, the source model and the target model are assumed to be a neural network model VGG16. VGG16 is comprised of 13 convolutional layers (CONV), 3 fully-connected layers (Dense), and 5 pooling layers. The layers that are targeted for training include convolutional layers and full-connected layers. The pooling layer is a layer that sub-samples the feature map output from the convolutional layer. The source model and the target model are not limited to VGG16, and the number of layers is not limited to that of the embodiment.

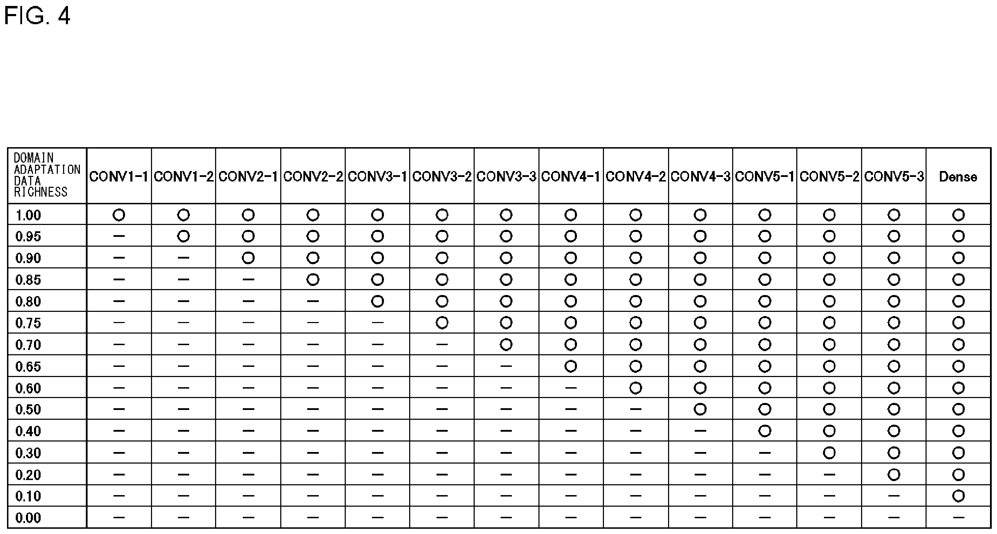

Fig. 4 shows layers in the target model that are targeted for training in accordance with the domain adaptation data richness.

When the domain adaptation data richness is 1.00, all layers are targeted for training. When the domain adaptation data richness is less than 1.00 and equal to more than 0.95, the layers other than CONV-1 are targeted for training. A duplicate of the layer CONV1-1 of the source model is used as it is. When the domain adaptation data richness is less than 0.95 and equal to or more than 0.90, the layers other than CONV1-1 and CONV1-2 are targeted for training. The duplicates of the layers CONV1-1 and CONV1-2 of the source model are used as they are. The rest remains the same, and, when the domain adaptation data richness is less than 0.10 and equal to or more than 0.00, none of the layers are targeted for training. In this case, the duplicates of all layers in the source model are used as they are.

Thus, the higher the domain adaptation data richness, the larger the number of convolutional layers, including those near the input layer, are targeted for training, and, the lower the domain adaptation data richness, the smaller the number of convolutional layers, and, those near the output layer, are targeted for training.

The relationship between the domain adaptation data richness and the layers targeted for training is not limited to the one described above. What is required is that the higher the domain adaptation data richness, the larger the number of layers from higher layers (layers near the input) to lower layers (layers near the output) are targeted for training, and the lower the domain adaptation data richness, the smaller the number of layers, and, lower layers (layers near the output), are targeted for training. Dense denotes the 3 full-connected layers. In this case, 3 full-connected layers are bundled for the purpose of control, but they may be controlled one by one as in the case of convolutional layers. In addition, the domain adaptation data richness is defined as a ratio between the number of items of training data in a class in the target domain in which class the per-class number of items of training data is the smallest and the predetermined number of items of training data TDNUM. However, the domain adaptation data richness may be the number of items of training data in a class in the target domain in which class the per-class number of items of training data is the smallest.

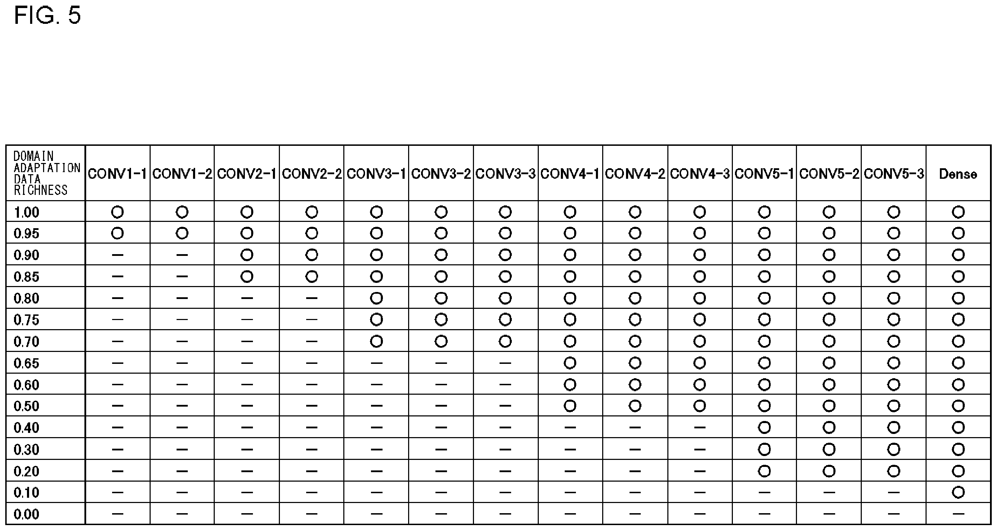

Fig. 5 shows further exemplary layers that are targeted for training in accordance with the domain adaptation data richness.

In the example shown in Fig. 5, a plurality of convolutional layers are bundled in units of pooling layers for the purpose of control. For example, the two convolutional layers CONV1-1 and CONV1-2 are bundled into one and are targeted for training when the domain adaptation data richness is not higher than 1.00 and not lower than 0.95, and the two convolutional layers CONV2-1 and CONV2-2 are bundled into one and are targeted for training when the domain adaptation data richness is not higher than 1.00 and not lower than 0.85. The rest remains the same, and two adjacent convolutional layers are bundled into one and are targeted for training. With the above configuration, it is possible to maintain feature extraction of the source model for each resolution of the feature map.

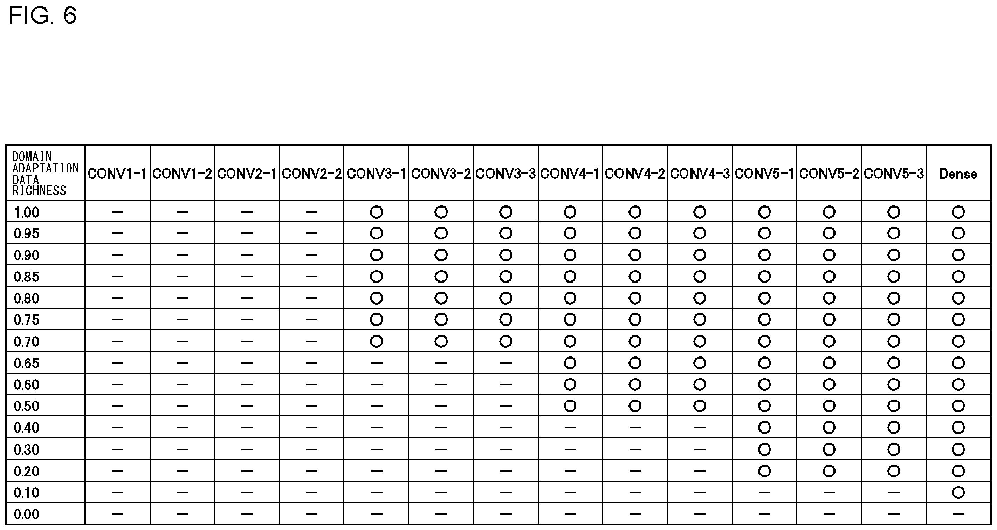

Fig. 6 shows further exemplary layers that are targeted for training in accordance with the domain adaptation data richness.

In the example shown in Fig. 6, layers near the input layer are not targeted for training invariably. In this case, the four convolutional layers CONV1-1, CONV1-2, CONV2-2, and CONV2-2 near the input layer are not targeted for training. With regard to the other convolutional layers, the higher the domain adaptation data richness, the smaller the number of convolutional layers, and, those near the output layer, are targeted for training.

This improves the precision and reduces the volume of computation by exploiting edge-level detailed feature extraction of the source model as it is and by starting with adapting a feature that is, to a degree, abstract in nature to the target domain.

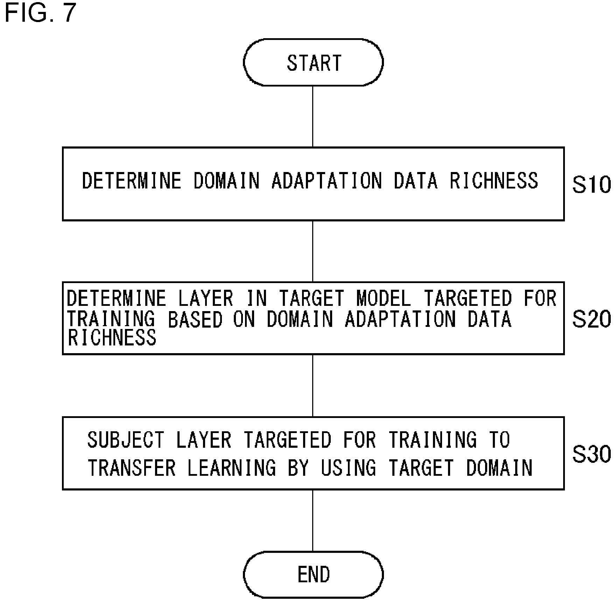

Fig. 7 is a flowchart showing a sequence of machine learning steps executed by the machine learning device of Fig. 1.

The domain adaptation data richness determination unit 52 of the transfer learning unit 50 of the machine learning device 100 determines the domain adaptation data richness based on the number of items of training data of the target domain (S10).

The learning layer determination unit 54 determines the layer in the target model, which is a duplicate of the source model, targeted for training, based on the domain adaptation data richness (S20).

The transfer learning execution unit 56 applies transfer learning to the layer in the target model targeted for training, by using images of the target domain as training data (S30).

The above-described various processes in the machine learning device 100 and the inference device 200 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, it is possible, according to the machine learning device 100 of the embodiment, to generate a target model adapted to the property of the domain, having high a processing efficiency, and having a high inference precision and generalization capability, by changing the layer in a neural network of the target model trained by transfer learning in accordance the domain adaptation data richness based on the number of items of training data of the target domain.

### [INDUSTRIAL APPLICABILITY]

The present invention relates to machine learning technologies.

### [REFERENCE SIGNS LIST]

10 source domain acquisition unit, 20 learning unit, 30 source model storage unit, 40 target domain acquisition unit, 50 transfer learning unit, 52 domain adaptation data richness determination unit, 54 learning layer determination unit, 56 transfer learning execution unit, 60 target model storage unit, 70 target domain acquisition unit, 80 inference unit, 90 inference result output unit, 100 machine learning device, 200 inference device

## Claims

1. A machine learning device (100) comprising:
a source model storage unit (30) that stores a source model, which is a neural network for receiving an image and specifying a class of an object in the image, trained by using training data of images of a source domain;
a domain adaptation data richness determination unit (52) that, when the source model is trained by transfer learning by using training data of images of a target domain, determines a domain adaptation data richness based on the number of items of the training data of the images of the target domain;
a learning layer determining unit (54) that determines a layer in a target model, which is a duplicate of the source model and a neural network for categorizing images of the target domain, targeted for training, based on the domain adaptation data richness; and
a transfer learning unit (56) that applies transfer learning to the layer in the target model targeted for training, by using the training data of the images of the target domain and generates the target model, wherein
the learning layer determining unit (54) determines whether a plurality of convolutional layers are bundled in units of pooling layers, which are layers that sub-sample feature map, and targeted for training or not,
the learning layer determining unit (54) determines that none of the layers of the target model are targeted for training, when the domain adaption data richness is less than a first predetermined value.

2. The machine learning device (100) according to claim 1, wherein
the learning layer determination unit (54) ensures that the higher the domain adaptation data richness, the larger the number of layers targeted for training, and the lower the domain adaptation data richness, the smaller the number of layers targeted for training.

3. The machine learning device (100) according to claim 1 or 2, wherein
the learning layer determination unit (54) includes more of layers near an input layer as layers targeted for training, as the domain adaptation data richness becomes higher.

4. The machine learning device (100) according to claim 1, wherein
the learning layer determination unit (54) determines only full-connected layers to be layers targeted for training when the domain adaptation data richness is equal to or lower than a second predetermined value.

5. A computer-implemented machine learning method comprising:
storing a source model, which is a neural network for receiving an image and specifying a class of an object in the image, trained by using training data of images of a source domain;
when the source model is trained by transfer learning by using training data of images of a target domain, determining a domain adaptation data richness based on the number of items of the training data of the images of the target domain;
determining a layer in a target model, which is a duplicate of the source model and a neural network for categorizing images of the target domain, targeted for training, based on the domain adaptation data richness; and
applying transfer learning to the layer in the target model targeted for training, by using the training data of the images of the target domain and generating the target model, wherein
the determining the layer in the target model determines whether a plurality of convolutional layers are bundled in units of pooling layers, which are layers that sub-sample feature map, and targeted for training or not; and
the determining the layer in the target model determines that none of the layers of the target model are targeted for training, when the domain adaption data richness is less than a first predetermined value.

6. A machine learning program comprising computer-implemented modules including:
a module that stores a source model, which is a neural network for receiving an image and specifying a class of an object in the image, trained by using training data of images of a source domain;
a module that, when the source model is trained by transfer learning by using training data of images of a target domain, determines a domain adaptation data richness based on the number of items of the training data of the images of the target domain;
a module that determines a layer in a target model, which is a duplicate of the source model and a neural network for categorizing images of the target domain, targeted for training, based on the domain adaptation data richness; and
a module that applies transfer learning to the layer in the target model targeted for training, by using the training data of the images of the target domain and generates the target model, wherein
the module that determines the layer in the target model determines whether a plurality of convolutional layers are bundled in units of pooling layers, which are layers that sub-sample feature map, and targeted for training or not; and
the module that determines the layer in the target model determines that none of the layers of the target model are targeted for training, when the domain adaption data richness is less than a first predetermined value.

## Patentansprüche

1. Eine Maschinenlernvorrichtung (100), aufweisend:
eine Quellenmodell-Speichereinheit (30), die ein Quellenmodell speichert, das ein neuronales Netz für das Empfangen eines Bilds und das Spezifizieren einer Klasse eines Objekts in dem Bild ist und unter Verwendung von Trainingsdaten von Bildern einer Quellendomäne trainiert wird,
eine Domänenadaptionsdatenreichtum-Bestimmungseinheit (52), die, wenn das Quellenmodell durch ein Transferlernen unter Verwendung von Trainingsdaten von Bildern einer Zieldomäne trainiert wird, einen Domänenadaptionsdatenreichtum basierend auf der Anzahl von Elementen der Trainingsdaten der Bilder der Zieldomäne bestimmt,
eine Lernschicht-Bestimmungseinheit (54), die eine Schicht in einem Zielmodell, das ein Duplikat des Quellenmodells und ein neuronales Netz für das Kategorisieren von Bildern der Zieldomäne, das trainiert werden soll, ist, basierend auf dem Domänenadaptionsdatenreichtum bestimmt, und
eine Transferlerneinheit (56), die ein Transferlernen auf die Schicht in dem Zielmodell, das trainiert werden soll, unter Verwendung der Trainingsdaten der Bilder der Zieldomäne anwendet und das Zielmodell generiert, wobei:
die Lernschicht-Bestimmungseinheit (54) bestimmt, ob eine Vielzahl von Faltungsschichten in Einheiten von Poolingschichten, die eine Merkmalsmap unterabtasten, gebündelt sind und trainiert werden sollen oder nicht, und
die Lernschicht-Bestimmungseinheit (54) bestimmt, dass keine der Schichten des Zielmodells trainiert werden sollen, wenn der Domänenadaptionsdatenreichtum kleiner als ein erster vorbestimmter Wert ist.

2. Maschinenlernvorrichtung (100) nach Anspruch 1, wobei:
die Lernschicht-Bestimmungseinheit (54) sicherstellt, dass bei einem größeren Domänenadaptionsdatenreichtum die Anzahl von Schichten, die trainiert werden sollen, größer ist und bei einem kleineren Domänenadaptionsdatenreichtum die Anzahl von Schichten, die trainiert werden sollen, kleiner ist.

3. Maschinenlernvorrichtung (100) nach Anspruch 1 oder 2, wobei:
die Lernschicht-Bestimmungseinheit (54) mehr Schichten in der Nähe einer Eingangsschicht als Schichten, die trainiert werden sollen, aufweist, wenn der Domänenadaptionsdatenreichtum größer wird.

4. Maschinenlernvorrichtung (100) nach Anspruch 1, wobei:
die Lernschicht-Bestimmungseinheit (54) nur vollständig verbundene Schichten als Schichten, die trainiert werden sollen, bestimmt, wenn der Domänenadaptionsdatenreichtum gleich oder kleiner als ein zweiter vorbestimmter Wert ist.

5. Ein computerimplementiertes Maschinenlernverfahren, aufweisend:
Speichern eines Quellenmodells, das ein neuronales Netz für das Empfangen eines Bilds und das Spezifizieren einer Klasse eines Objekts in dem Bild ist und unter Verwendung von Trainingsdaten von Bildern einer Quellendomäne trainiert wird,
wenn das Quellenmodell durch ein Transferlernen unter Verwendung von Trainingsdaten von Bildern einer Zieldomäne trainiert wird, Bestimmen eines Domänenadaptionsdatenreichtums basierend auf der Anzahl von Elementen der Trainingsdaten der Bilder der Zieldomäne,
Bestimmen einer Schicht in einem Zielmodell, das ein Duplikat des Quellenmodells und ein neuronales Netz für das Kategorisieren von Bildern der Zieldomäne, das trainiert werden soll, ist, basierend auf dem Domänenadaptionsdatenreichtum, und
Anwenden eines Transferlernens auf die Schicht in dem Zielmodell, das trainiert werden soll, unter Verwendung der Trainingsdaten der Bilder der Zieldomäne, und Generieren des Zielmodells, wobei:
das Bestimmen der Schicht in dem Zielmodell bestimmt, ob eine Vielzahl von Faltungsschichten in Einheiten von Poolingschichten, die eine Merkmalsmap unterabtasten, gebündelt sind und trainiert werden sollen oder nicht, und
das Bestimmen der Schicht in dem Zielmodell bestimmt, dass keine der Schichten des Zielmodells trainiert werden sollen, wenn der Domänenadaptionsdatenreichtum kleiner als ein erster vorbestimmter Wert ist.

6. Ein Maschinenlernprogramm, das die folgenden computerimplementierten Module aufweist:
ein Modul, das ein Quellenmodell speichert, das ein neuronales Netz für das Empfangen eines Bilds und das Spezifizieren einer Klasse eines Objekts in dem Bild ist und unter Verwendung von Trainingsdaten von Bildern einer Quellendomäne trainiert wird,
ein Modul, das, wenn das Quellenmodell durch ein Transferlernen unter Verwendung von Trainingsdaten von Bildern einer Zieldomäne trainiert wird, einen Domänenadaptionsdatenreichtum basierend auf der Anzahl von Elementen der Trainingsdaten der Bilder der Zieldomäne bestimmt,
ein Modul, das eine Schicht in einem Zielmodell, das ein Duplikat des Quellenmodells und ein neuronales Netz für das Kategorisieren von Bildern der Zieldomäne, das trainiert werden soll, ist, basierend auf dem Domänenadaptionsdatenreichtum bestimmt, und
ein Modul, das ein Transferlernen auf die Schicht in dem Zielmodell, das trainiert werden soll, unter Verwendung der Trainingsdaten der Bilder der Zieldomäne anwendet und das Zielmodell generiert, wobei:
das Modul, das die Schicht in dem Zielmodell bestimmt, bestimmt, ob eine Vielzahl von Faltungsschichten in Einheiten von Poolingschichten, die eine Merkmalsmap unterabtasten, gebündelt sind und trainiert werden sollen oder nicht, und
das Modul, das die Schicht in dem Zielmodul bestimmt, bestimmt, dass keine der Schichten des Zielmodells trainiert werden sollen, wenn der Domänenadaptionsdatenreichtum kleiner als ein erster vorbestimmter Wert ist.

## Revendications

1. Dispositif d'apprentissage automatique (100) comprenant :
une unité de stockage de modèle source (30) qui stocke un modèle source qui est un réseau neuronal destiné à recevoir une image et spécifier une classe d'un objet dans l'image, entraîné par l'utilisation de données d'entraînement d'images d'un domaine source ;
une unité de détermination de richesse de données d'adaptation de domaine (52) qui, lorsque le modèle source est entraîné par apprentissage par transfert par l'utilisation de données d'entraînement d'images d'un domaine cible, détermine une richesse de données d'adaptation de domaine sur la base du nombre d'éléments des données d'entraînement des images du domaine cible ;
une unité de détermination de couche d'apprentissage (54) qui détermine une couche dans un modèle cible, qui est une copie du modèle source et un réseau neuronal destiné à catégoriser des images du domaine cible, ciblée pour être entraînée, sur la base de la richesse des données d'adaptation au domaine ; et
une unité d'apprentissage par transfert (56) qui applique l'apprentissage par transfert à la couche du modèle cible ciblée pour être entraînée, par l'utilisation des données d'entraînement des images du domaine cible et génère le modèle cible, dans lequel
l'unité de détermination de couche d'apprentissage (54) détermine si une pluralité de couches de convolution sont regroupées en unités de couches de regroupement, qui sont des couches qui sous-échantillonnent une carte de caractéristiques et ciblées pour être entraînées ou pas,
l'unité de détermination de couche d'apprentissage (54) détermine qu'aucune des couches du modèle cible n'est ciblée pour être entraînée, lorsque la richesse de données d'adaptation de domaine est inférieure à une première valeur prédéterminée.

2. Dispositif d'apprentissage automatique (100) selon la revendication 1, dans lequel
l'unité de détermination de la couche d'apprentissage (54) garantit que plus la richesse des données d'adaptation au domaine est élevée, plus le nombre de couches ciblées pour être entraînées est important, et que plus la richesse des données d'adaptation au domaine est faible, plus le nombre de couches ciblées pour être entraînées est faible.

3. Dispositif d'apprentissage automatique (100) selon la revendication 1 ou 2, dans lequel
l'unité de détermination de la couche d'apprentissage (54) comporte plus de couches à proximité d'une couche d'entrée comme couches ciblées pour être entraînées, à mesure que la richesse des données d'adaptation au domaine augmente.

4. Dispositif d'apprentissage automatique (100) selon la revendication 1, dans lequel
l'unité de détermination de la couche d'apprentissage (54) détermine que seules les couches entièrement connectées sont ciblées pour être entraînées lorsque la richesse des données d'adaptation de domaine est égale ou inférieure à une deuxième valeur prédéterminée.

5. Procédé d'apprentissage automatique mis en œuvre par ordinateur, comprenant :
le stockage d'un modèle source qui est un réseau neuronal destiné à recevoir une image et spécifier une classe d'un objet dans l'image, entraîné par l'utilisation de données d'entraînement d'images d'un domaine source ;
lorsque le modèle source est entraîné par apprentissage par transfert par l'utilisation de données d'entraînement d'images d'un domaine cible, la détermination d'une richesse de données d'adaptation de domaine sur la base du nombre d'éléments des données d'entraînement des images du domaine cible ;
la détermination d'une couche dans un modèle cible, qui est une copie du modèle source et un réseau neuronal destiné à catégoriser des images du domaine cible, ciblées pour être entraînées, sur la base de la richesse des données d'adaptation au domaine ; et
l'application d'un apprentissage par transfert à la couche du modèle cible ciblée pour être entraînée, par l'utilisation des données d'entraînement des images du domaine cible et la génération du modèle cible, dans lequel
la détermination de la couche dans le modèle cible détermine si une pluralité de couches de convolution sont regroupées en unités de couches de regroupement, qui sont des couches qui sous-échantillonnent une carte de caractéristiques et ciblées pour être entraînées ou pas ; et
la détermination de la couche dans le modèle cible détermine qu'aucune des couches du modèle cible n'est ciblée pour être entraînée, lorsque la richesse de données d'adaptation de domaine est inférieure à une première valeur prédéterminée.

6. Programme d'apprentissage automatique comprenant des modules mis en œuvre par ordinateur, comportant :
un module qui stocke un modèle source qui est un réseau neuronal destiné à recevoir une image et spécifier une classe d'un objet dans l'image, entraîné par l'utilisation de données d'entraînement d'images d'un domaine source ;
un module qui, lorsque le modèle source est entraîné par apprentissage par transfert par l'utilisation de données d'entraînement d'images d'un domaine cible, détermine une richesse de données d'adaptation de domaine sur la base du nombre d'éléments des données d'entraînement des images du domaine cible ;
un module qui détermine une couche dans un modèle cible, qui est une copie du modèle source et un réseau neuronal destiné à catégoriser des images du domaine cible, ciblée pour être entraînée, sur la base de la richesse des données d'adaptation au domaine ; et
un module qui applique l'apprentissage par transfert à la couche du modèle cible ciblée être entraînée, par l'utilisation des données d'entraînement des images du domaine cible et génère le modèle cible, dans lequel
le module qui détermine la couche dans le modèle cible détermine si une pluralité de couches de convolution sont regroupées en unités de couches de regroupement, qui sont des couches qui sous-échantillonnent une carte de caractéristiques et ciblées pour être entraînées ou pas,
le module qui détermine la couche dans le modèle cible détermine qu'aucune des couches du modèle cible n'est ciblée pour être entraînée, lorsque la richesse de données d'adaptation de domaine est inférieure à une première valeur prédéterminée.
